(19) Europäisches Patentamt
European Patent Office
Office européen des brevets

(11) **EP 4 601 104 A1**

(12) **EUROPEAN PATENT APPLICATION**
published in accordance with Art. 153(4) EPC

(43) Date of publication:
**13.08.2025  Bulletin 2025/33**

(21) Application number: **23927913.6**

(22) Date of filing: **17.03.2023**

(51) International Patent Classification (IPC):
*H01M 50/489* (2021.01)     *H01M 50/491* (2021.01)
*H01M 50/494* (2021.01)     *H01M 50/44* (2021.01)
*H01M 50/449* (2021.01)     *H01G 11/52* (2013.01)

(52) Cooperative Patent Classification (CPC):
**H01G 11/52; H01M 50/44; H01M 50/449;**
**H01M 50/489; H01M 50/491; H01M 50/494;**
**Y02E 60/10**

(86) International application number:
**PCT/CN2023/082337**

(87) International publication number:
**WO 2024/192594 (26.09.2024 Gazette 2024/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Contemporary Amperex Technology**
**(Hong Kong) Limited**
**Central (HK)**

(72) Inventors:
• **WANG, Zhaoguang**
  **Ningde, Fujian 352100 (CN)**
• **YANG, Jianrui**
  **Ningde, Fujian 352100 (CN)**

• **OUYANG, Chuying**
  **Ningde, Fujian 352100 (CN)**
• **SUN, Chengdong**
  **Ningde, Fujian 352100 (CN)**
• **HUANG, Siying**
  **Ningde, Fujian 352100 (CN)**
• **MU, Xueying**
  **Ningde, Fujian 352100 (CN)**
• **LI, Quan**
  **Ningde, Fujian 352100 (CN)**
• **HAN, Chongwang**
  **Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **SEPARATOR, SECONDARY BATTERY, AND ELECTRICAL APPARATUS**

(57)     The present application provides a separator, comprising a first base membrane and a second base membrane, wherein the melting point of the second base membrane is lower than the melting point of the first base membrane, and the average fiber filament diameter of the first base membrane is greater than the average fiber filament diameter of the second base membrane. The average fiber filament diameter of the second base membrane is smaller, so that the second base membrane has a richer pore structure, and the tolerance capability of the second base membrane to physical puncture of lithium dendrites is enhanced. In addition, when the average fiber filament diameter of the first base membrane having a high melting point is greater than the average fiber filament diameter of the second base membrane having a low melting point, the continuity and effectiveness of a final separator ion transmission channel can also be guaranteed, thereby improving the reliability of the separator, and improving the reliability of the secondary battery.

**FIG. 2**

**Description**

**TECHNICAL FIELD**

The present application relates to the field of secondary battery technologies, and in particular to a separator, a secondary battery, and an electrical apparatus.

**BACKGROUND**

Secondary batteries, due to the prominent characteristics of being lightweight and pollution-free, and having no memory effect, are widely applied in various types of consumer electronics and electric vehicles. With the continuous development of the new energy industry, users have put forward higher usage requirements for the reliability of secondary batteries.

Therefore, how to enable secondary batteries to possess better reliability is currently an urgent problem to be solved. Reliability

**SUMMARY OF THE INVENTION**

In view of the technical problems existing in the background art, the present application provides a separator, aiming to improve the reliability of secondary batteries.

To achieve the above objective, in a first aspect, the present application provides a separator, including: a first base film and a second base film, a melting point of the second base film being lower than a melting point of the first base film, where an average fiber filament diameter in the first base film is greater than an average fiber filament diameter in the second base film.

Compared with the prior art, the present application includes at least the following beneficial effects.

When the average fiber filament diameter of the first base film with a higher melting point is greater than the average fiber filament diameter of the second base film with a lower melting point, the smaller average fiber filament diameter of the second base film endows the second base film with abundant pore channel structures, enhancing its tolerance to physical puncture by lithium dendrites. Additionally, when the average fiber filament diameter of the first base film with a higher melting point is greater than the average fiber filament diameter of the second base film with a lower melting point, it is also possible to ensure the continuity and effectiveness of ion transport channels in the final separator, which can enable the final separator to possess both heat resistance and high strength, thereby improving the reliability of the separator.

In any implementation of the present application, a ratio of the average fiber filament diameter in the first base film to the average fiber filament diameter in the second base film is greater than or equal to 1.1-9, optionally 1.2-4.5.

In any implementation of the present application, the average fiber filament diameter in the first base film is 50 nm-550 nm, optionally 80 nm-350 nm.

In any implementation of the present application, the average fiber filament diameter in the second base film is 30 nm-450 nm, optionally 50 nm-260 nm.

When the average fiber filament diameters of the first base film and/or the second base film are selected from within the aforementioned ranges, the two base films are enabled to possess abundant pore channel structures while maintaining high strength, so that the continuity and effectiveness of ion transport channels in the final separator are ensured, thereby further improving the reliability of the separator.

In any implementation of the present application, a ratio of a weight per unit area of the first base film to a weight per unit area of the second base film is greater than or equal to 1.02, optionally 1.2-2.5.

In any implementation of the present application, the weight per unit area of the first base film is 2.5 g/m2-10 g/m2, optionally 3 g/m2-7 g/m2; and/or the weight per unit area of the second base film is 2 g/m2-10 g/m2, optionally 2.5 g/m2-6 g/m2.

When the weight per unit area of the first base film and the weight per unit area of the second base film are within the aforementioned ranges, the separator is enabled to better possess both heat resistance and strength, thereby further improving the reliability of the separator.

In any implementation of the present application, the melting point of the first base film is 160 °C-370 °C, optionally 165 °C-330 °C; and/or the melting point of the second base film is 120 °C-265 °C, optionally 130 °C-230 °C.

When the melting point of the first base film is 160 °C-370 °C, and/or the melting point of the second base film is 120 °C-265 °C, the combination of the two can enable the separator to possess both heat resistance and high strength, thereby improving the reliability of the separator. When the melting point of the first base film is 165 °C-330 °C, and/or the melting point of the second base film is 130 °C-230 °C, the separator can further be enabled to possess both heat resistance and high strength, thereby further improving the reliability of the separator.

In any implementation of the present application, a thickness of the first base film is greater than or equal to a thickness of the second base film; and optionally, a ratio of the thickness of the first base film to the thickness of the second base film is 1.1-5, optionally 1.5-3.0.

In any implementation of the present application, the thickness of the first base film is 2 $\mu$m-12 $\mu$m, optionally 3 $\mu$m-6 $\mu$m; and/or, the thickness of the second base film is 2 $\mu$m-9 $\mu$m, optionally 3 $\mu$m-5 $\mu$m.

When the thickness of the first base film and/or the second base film is within the aforementioned ranges, the battery can be enabled to possess good reliability while further increasing the energy density of the battery.

In any implementation of the present application, a ratio of a porosity of the first base film to a porosity of the second base film is 1.05-3, optionally 1.1-1.5.

When the ratio of the porosity of the first base film to the porosity of the second base film is 1.05-3, the first base film exhibits higher porosity, providing better air permeability, while the second base film has lower porosity, delivering higher strength to provide a support function. Thus, the lamination of the first base film and the second base film can improve the reliability and cycling performance of the secondary battery. When the ratio of the porosity of the first base film to the porosity of the second base film is 1.1-1.5, the air permeability and the supporting performance of the separator can be further balanced, thereby further improving the reliability and the cycling performance of the secondary battery.

In any implementation of the present application, the porosity of the first base film is 30%-80%, optionally 50%-75%; and/or the porosity of the second base film is 30%-70%, optionally 40%-50%.

When the porosity of the first base film and/or the second base film is within the aforementioned ranges, the air permeability and the supporting performance of the separator can be further balanced, thereby further improving the reliability and the cycling performance of the secondary battery.

In any implementation of the present application, the separator further includes an interlayer, where the interlayer is disposed between the first base film and the second base film, and the interlayer includes a binder; and optionally, the interlayer further includes filler particles. When an interlayer is disposed between the first base film and the second base film, and the interlayer includes filler particles, the reliability of the secondary battery can be improved.

In any implementation of the present application, the binder includes one or more of polyacrylate, acrylic acid, carboxymethyl cellulose, polyvinylidene fluoride-co-trichloroethylene copolymer, polymethyl methacrylate, polyvinylpyrrolidone, polyvinyl acetate, polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, and cyanoethyl pullulan. When an interlayer is disposed between the first base film and the second base film, and the binder in the interlayer includes the aforementioned components, the reliability of the secondary battery can be improved.

In any implementation of the present application, the filler particles include at least one of inorganic particles, organic particles, and organic-metal framework materials.

When an interlayer is disposed between the first base film and the second base film, and the filler particles in the interlayer include at least one of the aforementioned inorganic particles, organic particles, and organic-metal framework materials, the filler particles in the interlayer can enable further improvement of the heat resistance and the strength of the separator, thereby improving the reliability of the secondary battery.

In any implementation of the present application, the separator satisfies at least one of the following (1)-(3): (1) the weight per unit area of the separator is 5-20 g/m2, optionally 6-15 g/m2; (2) the porosity of the separator is 30%-55%, optionally 35%-45%; and (3) the air permeability of the separator is less than 350 s/100 cc, optionally 150 s/100 cc-300 s/100 cc.

When the separator satisfies at least one of the aforementioned features within the given ranges, the separator can be enabled to possess good heat resistance and strength, thereby improving the reliability and cycling performance of the secondary battery.

In a second aspect, the present application provides a secondary battery, including the separator of any of the aforementioned schemes. When the secondary battery employs the provided separator, the reliability of the secondary battery can be improved.

In any implementation of the present application, the secondary battery further includes a positive electrode plate and a negative electrode plate, where the separator is disposed between the positive electrode plate and the negative electrode plate, and the second base film of the separator faces the negative electrode plate. When the secondary battery employs the provided separator, the second base film with a smaller average fiber filament diameter faces the negative electrode plate. The second base film possesses better strength, allowing it to exhibit its excellent physical performance and is less likely to be punctured by lithium dendrites generated at the negative electrode, thereby improving the reliability of the secondary battery.

In a third aspect, the present application provides an electrical apparatus, including the secondary battery of the second aspect of the present application. When the secondary battery in the electrical apparatus employs the provided separator, the reliability of the electrical apparatus can be improved.

Since the apparatus of the present application includes the secondary battery provided in the present application, it at least possesses the same advantages as the secondary battery.

## BRIEF DESCRIPTION OF DRAWINGS

To more clearly illustrate the technical solutions of the present application, the following provides a brief description of the accompanying drawings used in the present application. It is evident that the drawings described below are merely some implementations of the present application. For those of ordinary skill in the art, other drawings may be derived from these figures without creative effort.

Fig. 1 is a structural schematic diagram of an implementation of a separator of the present application.
Fig. 2 is a structural schematic diagram of another implementation of a separator of the present application.
Fig. 3 is a schematic diagram of an implementation of a secondary battery.
Fig. 4 is an exploded view of Fig. 3.
Fig. 5 is a schematic diagram of an implementation of a battery module.
Fig. 6 is a schematic diagram of an implementation of a battery pack.
Fig. 7 is an exploded view of Fig. 6.
Fig. 8 is a schematic diagram of an implementation of an apparatus using a secondary battery as a power source.

## DETAILED DESCRIPTION

The following describes the present application in further detail with reference to specific implementations. It should be understood that these specific implementations are provided solely to illustrate the present application and shall not be construed as limiting the scope of the present application.
For conciseness, only certain numerical ranges are explicitly disclosed herein. However, any lower limit may be combined with any upper limit to form a range not explicitly recited; any lower limit may be combined with another lower limit to form a range not explicitly recited; and any upper limit may be combined with another upper limit to form a range not explicitly recited. Additionally, each individually disclosed point or single numerical value may itself serve as a lower or upper limit to form a range not explicitly recited by combining with any other point or single numerical value, or with other lower or upper limits.
In the description herein, unless otherwise stated, the term "or" is inclusive. That is, the phrase "A or B" means "A, B, or both A and B". More specifically, the condition "A or B" is satisfied under any one of the following conditions: A is true (or present) and B is false (or absent); A is false (or absent) and B is true (or present); or both A and B are true (or present).
In the description herein, it should be noted that, "above" and "below" are inclusive of the numerical numeral itself, and the meaning of "more" in "one or more" is two and more, unless otherwise specified.
Unless otherwise stated, the terms used in the present application have the well-known meanings commonly understood by those skilled in the art. Unless otherwise specified, numerical values of parameters mentioned in the present application may be measured using common measurement methods in the art (e.g., the test may be performed based on methods provided in the embodiments of the present application).

Secondary battery

A secondary battery refers to a battery that can be used continually by activating an active material in a charging manner, after the battery is discharged.
Generally, the secondary battery pack includes a positive electrode plate, a negative electrode plate, a separator, and an electrolyte. During charging and discharging of the battery, active ions are intercalated and deintercalated back and forth between the positive electrode plate and the negative electrode plate. The separator is disposed between the positive electrode plate and the negative electrode plate, serving the function of isolation. The electrolyte serves to conduct ions between the positive electrode plate and the negative electrode plate.

[Separator]

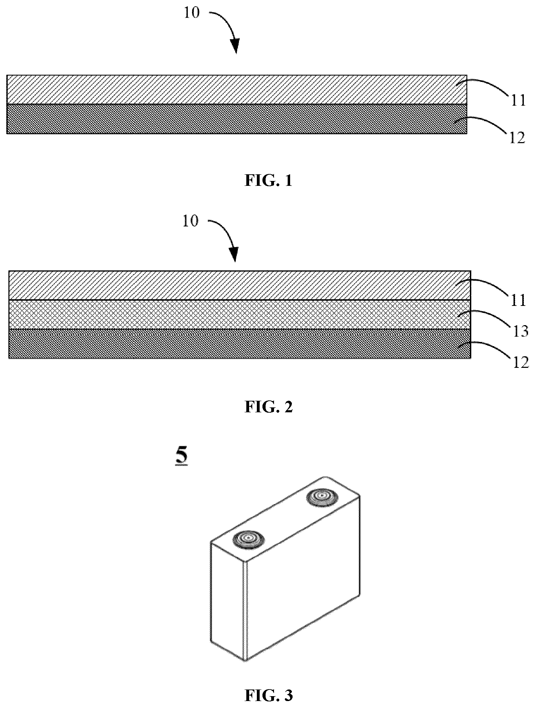

With reference to Fig. 1, an embodiment of the present application provides a separator 10, including: including a first base film 11 and a second base film 12, the melting point of the second base film 12 being lower than the melting point of the first base film 11, where the average fiber filament diameter in the first base film 11 is greater than the average fiber filament diameter in the second base film 12.
Without wishing to be bound by any theory, the inventors have discovered through extensive research that in the specific separator 10 structure of the present application, laminating the first base film 11 with a higher melting point and a larger average fiber filament diameter and the second base film 12 with a lower melting point and a smaller average fiber filament diameter can enable the final separator 10 to possess both better heat resistance and higher strength, thereby improving the reliability of the separator.

The inventors have discovered through further research that when the separator further optionally satisfies one or more of the following designs, the performance of the battery can be further enhanced.

There is no particular limitation on the materials of the first base film 11 and the second base film 12, and any well-known base film having good chemical stability and strength stability. The materials of the first base film 11 and the second base film 12 in the separator 10 may be the same or different. In some implementations, the first base film 11 and the second base film 12 may be selected from one or more of polyolefin, polyether, polyetheretherketone, polyethylene terephthalate, polyimide, polytetrafluoroethylene, polyvinylidene tetrafluoride, polyvinyl alcohol, glass fiber, non-woven fabric, polyethylene, polypropylene, and polyvinylidene fluoride.

When the average fiber filament diameter of the first base film with a higher melting point is greater than the average fiber filament diameter of the second base film with a lower melting point, the smaller average fiber filament diameter of the second base film endows the second base film with abundant pore channel structures, enhancing its tolerance to physical puncture by lithium dendrites. Additionally, when the average fiber filament diameter of the first base film with a higher melting point is greater than the average fiber filament diameter of the second base film with a lower melting point, it is also possible to ensure the continuity and effectiveness of ion transport channels in the final separator, which can enable the final separator to possess both heat resistance and high strength, thereby improving the reliability of the separator.

In any implementation of the present application, a ratio of the average fiber filament diameter in the first base film 11 to the average fiber filament diameter in the second base film 12 is 1.1-9, optionally 1.2-4.5. For example, the ratio of the average fiber filament diameter in the first base film 11 to the average fiber filament diameter in the second base film 12 may be 1.1, 1.2, 1.6, 2.0, 2.2, 2.4, 2.9, 3.0, 3.5, 4.0, 4.4, 4.5, 4.7, 5.2, 5.8, 6.3, 6.6, 7.0, 7.8, 8.0, 8.4, or 9.0, etc., or a range formed by any two of the aforementioned values, such as 1.1-1.2, 1.6-2.0, 2.2-2.9, 3.0-4.0, 3.5-4.5, 4.7-5.2, 5.8-6.3, 6.6-7.0, 7.8-8.0, or 8.0-9.0, etc.

In any implementation of the present application, the average fiber filament diameter in the first base film 11 is 50 nm-550 nm, optionally 80 nm-350 nm.

For example, the average fiber filament diameter in the first base film 11 may be 50 nm, 60 nm, 75 nm, 80 nm, 93 nm, 100 nm, 116 nm, 135 nm, 160 nm, 188 nm, 200 nm, 225 nm, 293 nm, 300 nm, 316 nm, 350 nm, 460 nm, 510 nm, 550 nm, etc., or a range formed by any two of the aforementioned values, such as 80 nm-350 nm, 50 nm-60 nm, 75 nm-80 nm, 80 nm-100 nm, 100 nm-135 nm, 135 nm-188 nm, 200 nm-225 nm, 225 nm-300 nm, 316 nm-350 nm, 510 nm-550 nm, etc.

In any implementation of the present application, the average fiber filament diameter in the second base film 12 is 30 nm-450 nm, optionally 50 nm-260 nm.

For example, the average fiber filament diameter in the first base film 11 may be 30 nm, 44 nm, 75 nm, 80 nm, 93 nm, 100 nm, 116 nm, 135 nm, 160 nm, 188 nm, 204 nm, 255 nm, 288 nm, 300 nm, 326 nm, 350 nm, 397 nm, 400 nm, 420 nm, 450 nm, etc., or a range formed by any two of the aforementioned values, such as 50 nm-260 nm, 30 nm-44 nm, 75 nm-80 nm, 80 nm-93 nm, 100 nm-135 nm, 160 nm-188 nm, 204 nm-255 nm, 288 nm-300 nm, 326 nm-350 nm, 400 nm-450 nm, etc.

When the average fiber filament diameters of the first base film and/or the second base film are selected from within the aforementioned ranges, the two base films are enabled to possess abundant pore channel structures while maintaining high strength, so that the continuity and effectiveness of ion transport channels in the final separator are ensured, thereby further improving the reliability of the separator.

The average fiber filament diameter of the base film has a meaning well-known in the art and can be tested using known devices and methods. For example, a scanning electron microscope (e.g., ZEISS Sigma 300) may be used to acquire scanning electron microscope (SEM) images of the base film with reference to JY/T010-1996. Specifically, a test sample with length $\times$ width = 5 mm $\times$ 5 mm is randomly selected on the base film. A plurality of test regions (e.g., 5 areas) are randomly selected from the test sample, and magnified to a level (e.g., 10K times) where fiber diameters are clearly observable. A plurality of locations (e.g., at least 30 locations) are selected using a scale for measurement, and the average value of the plurality of fiber filament diameters is calculated, which is defined as the average fiber filament diameter of the base film.

In any implementation of the present application, a ratio of the weight per unit area of the first base film 11 to the weight per unit area of the second base film 12 is greater than or equal to 1.02, optionally 1.2-2.5.

For example, it may be 1.1, 1.11, 1.2, 1.3, 1.35, 1.4, 1.5, 1.65, 1.7, 1.8, 1.9, 2, 2.3, 2.5, 2.55, 2.6, 3, 3.5, 3.85, 4, 4.5, 5, 6, etc., or a range greater than or equal to any of the aforementioned values, such as $\geq$1.1, $\geq$1.11, $\geq$1.2, $\geq$1.35, $\geq$1.5, $\geq$1.8, $\geq$2, $\geq$2.5, $\geq$3, $\geq$3.85, $\geq$4, $\geq$5, $\geq$6, etc., or a range formed by any two of the above values, such as 1.2-2.5, 1.1-1.5, 1.65-1.9, 1.7-2.3, 2-2.55, 2.55-3, 2.6-3.5, etc.

In any implementation of the present application, the weight per unit area of the first base film 11 is 2.5 g/m$^2$-10 g/m$^2$. For example, it may be 2.5 g/m$^2$, 3 g/m$^2$, 3.5 g/m$^2$, 5 g/m$^2$, 7 g/m$^2$, 8.1 g/m$^2$, 9 g/m$^2$, or 10 g/m$^2$, or a range formed by any two of the aforementioned values, such as 2.5 g/m$^2$-3 g/m$^2$, 3 g/m$^2$-5 g/m$^2$, 3g/m$^2$-7 g/m$^2$, 5 g/m$^2$-8.1 g/m$^2$, 7 g/m$^2$-10

$g/m^2$, etc. In some embodiments, the weight per unit area of the first base film 11 is $3g/m^2$-$7g/m^2$.

In any implementation of the present application, the weight per unit area of the second base film 12 is $2 g/m^2$-$10 g/m^2$. For example, it may be $2 g/m^2$, $2.5 g/m^2$, $3 g/m^2$, $5 g/m^2$, $6 g/m^2$, $8.1 g/m^2$, $9 g/m^2$, or $10 g/m^2$, or a range formed by any two of the aforementioned values, such as $2 g/m^2$-$3 g/m^2$, $3 g/m^2$-$5 g/m^2$, $2.5 g/m^2$-$6g/m^2$, $5 g/m^2$-$8.1 g/m^2$, $7 g/m^2$-$10 g/m^2$, etc. In some embodiments, the weight per unit area of the second base film 12 is $2.5g/m^2$-$6g/m^2$.

When the weight per unit area of the first base film and the weight per unit area of the second base film are within the aforementioned ranges, the separator is enabled to better possess both heat resistance and strength, thereby further improving the reliability of the separator.

The weight per unit area of the base film has a meaning well-known in the art and can be tested using known devices and methods. For example, the weight per unit area of the base film may be measured by the following method: (1) stack the base film into 6 stacks, flatten and compress them to expel air from the base film; and cut the stacked base films into samples according to a cutting template, measure the length and width of the cut samples every other stack to obtain the areas S1, S2, and S3 of three samples; (2) weigh the three samples separately to obtain their weights M1, M2, and M3; and (3) obtain the weight per unit area of the three samples separately according to the formula: weight per unit area of the base film = M/S, and take the average value of the weights per unit area of the three samples as the weight per unit area of the base film.

In any implementation of the present application, the melting point of the first base film 11 is 160°C-370°C. For example, it may be 160°C, 165°C, 170°C, 180°C, 196°C, 200°C, 225°C, 235°C, 245°C, 260°C, 280°C, 290°C, 300°C, 315°C, 320°C, 330°C, 350°C, 370°C, etc., or a range formed by any two of the aforementioned values, such as 160°C-170°C, 180°C-235°C, 225°C-280°C, 290°C-315°C, 350°C-370°C, etc. In some embodiments, the melting point of the first base film 11 is optionally 165°C-330°C. The melting point of the second base film 12 is 120°C-265°C. For example, it may be 120°C, 130°C, 135°C, 140°C, 145°C, 150°C, 155°C, 160°C, 165°C, 196°C, 200°C, 240°C, 265°C, etc., or a range formed by any two of the aforementioned values, such as 120°C-135°C, 130°C-150°C, 145°C-155°C, 155°C-165°C, 196°C-200°C, 240°C-265°C, etc. In some embodiments, the melting point of the second base film 12 is optionally 130°C-230°C.

When the melting point of the first base film is 160 °C-370 °C, and/or the melting point of the second base film is 120 °C-265 °C, the combination of the two can enable the separator to possess both heat resistance and high strength, thereby improving the reliability of the separator. When the melting point of the first base film is 165 °C-330 °C, and/or the melting point of the second base film is 130 °C-230 °C, the separator can further be enabled to possess both heat resistance and high strength, thereby further improving the reliability of the separator.

The melting points of the first base film and the second base film can be tested using devices and methods known in the art. For example, differential scanning calorimetry may be used for measurement. Specifically, reference can be made to the standard GB/T 19466.3-2004. As an example, the measurement may be performed in accordance with the following method: take 4-6 mg of the sample to be tested, place it in the sample chamber of a differential scanning calorimeter, and increase the temperature from 25°C to 400°C at a temperature rise rate of 10°C/min to obtain the melting endothermic curve of the sample, where the temperature corresponding to the peak of the curve is the melting point of the sample.

In any implementation of the present application, the thickness of the first base film 11 is greater than or equal to the thickness of the second base film 12; and optionally, a ratio of the thickness of the first base film 11 to the thickness of the second base film 12 is 1.1-5. For example, it may be 1.1, 1.2, 1.25, 1.3, 1.45, 1.5, 1.6, 1.75, 1.8, 1.9, 2.0, 2.15, 2.2, 2.3, 2.45, 2.5, 2.8, 3.0, 3.5, 4.0, 4.5, or 5.0, or a range formed by any two of the aforementioned values, such as 1.1-2.0, 1.6-2.15, 2.3-2.5, 2.8-3.5, 3-5, etc. In some embodiments, the ratio of the thickness of the first base film 11 to the thickness of the second base film 12 is more preferably 1.5-3.0. For example, the first base film and the second base film are selected from polyolefin materials.

In any implementation of the present application, the thickness of the first base film 11 is 2 μm-12 μm. For example, it may be 2 μm, 2.5 μm, 3 μm, 3.5 μm, 4.6 μm, 5 μm, 6 μm, 7 μm, 9 μm, 9.6 μm, 10 μm, 10.4 μm, 11 μm, 11.7 μm, or 12 μm, or a range formed by any two of the aforementioned values, such as 2 μm-2.5 μm, 2.5 μm-3 μm, 3 μm-4.6 μm, 5 μm-9 μm, 10 μm-11 μm, 11 μm-12 μm, etc. In some embodiments, the thickness of the first base film 11 is optionally 3 μm-6 μm. The thickness of the second base film 12 is 2 μm-9 μm. For example, it may be 2 μm, 3 μm, 3.5 μm, 5 μm, 6 μm, 7 μm, 9 μm, etc., or it may be 2 μm-3.5 μm, 3 μm-5 μm, 5 μm-6 μm, 7 μm-9 μm, etc. In some embodiments, the thickness of the second base film 12 is optionally 3 μm-5 μm.

When the thickness of the first base film and/or the second base film is within the aforementioned ranges, the battery can be enabled to possess good reliability while further increasing the energy density of the battery.

The thickness of the base film can be tested using devices and methods known in the art. For example, a thickness gauge may be used to measure the thickness of the base film. Specifically, the following method may be adopted: take six groups of parallel samples, use a micrometer thickness gauge to measure the thicknesses of each group of samples at different positions, measure at least 20 points for each group of samples, and take the average value of the thicknesses of the six groups of samples as the thickness of the base film.

In any implementation of the present application, a ratio of the porosity of the first base film 11 to the porosity of the second base film 12 is 1.05-3. For example, it may be 1.05, 1.2, 1.3, 1.4, 1.51, 1.6, 1.7, 1.8, 1.9, 2.0, 2.1, 2.2, 2.4, 2.5, 2.71, 2.8, or 3, or a range formed by any two of the aforementioned values, such as 1.05-2.2, 1.2-1.51, 1.3-1.8, 1.6-2.1, 1.7-2.2, 2.1-3, etc. In some embodiments, the ratio of the porosity of the first base film 11 to the porosity of the second base film 12 is 1.1-1.5.

When the ratio of the porosity of the first base film to the porosity of the second base film is 1.05-3, the first base film exhibits higher porosity, providing better air permeability, while the second base film has lower porosity, delivering higher strength to provide a support function. Thus, the lamination of the first base film and the second base film can improve the reliability and cycling performance of the secondary battery. When the ratio of the porosity of the first base film to the porosity of the second base film is 1.1-1.5, the air permeability and the supporting performance of the separator can be further balanced, thereby further improving the reliability and the cycling performance of the secondary battery.

In any implementation of the present application, the porosity of the first base film 11 is 30%-80%. For example, it may be 30%, 35%, 38%, 40%, 50%, 55%, 60%, 70%, 75%, or 80%, or a range formed by any two of the aforementioned values, such as 30%-40%, 35%-50%, 50%-70%, 75%-80%, etc. In some embodiments, the porosity of the first base film 11 is 50%-75%.

In any implementation of the present application, the porosity of the second base film 12 is 30%-70%. For example, it may be 30%, 35%, 40%, 45%, 50%, 60%, 65%, or 70%, or a range formed by any two of the aforementioned values, such as 30%-40%, 35%-45%, 50%-60%, 65%-70%, etc. In some embodiments, the porosity of the second base film 12 is 40%-50%.

When the porosity of the first base film is 30%-80% and/or the porosity of the second base film is 30%-70%, the first base film exhibits higher porosity with a larger average fiber filament diameter, providing better air permeability, while the second base film has lower porosity with a smaller average fiber diameter, delivering higher strength to provide a support function. Thus, the lamination of the first base film and the second base film can further improve the reliability and cycling performance of the secondary battery. When the porosity of the first base film is 50%-75% and/or the porosity of the second base film is 40%-50%, the air permeability and the supporting performance of the separator can be further balanced, thereby further improving the reliability and the cycling performance of the secondary battery.

The porosity of the separator or substrate has a meaning well-known in the art and can be tested using known devices and methods. For example, the test can be performed with reference to GB/T 24586-2009. The test method is as follows: punch the separator or substrate into small round sheet samples with a diameter of 14 mm, measure the thickness, and calculate the apparent volume V1 of the separator or substrate according to the cylindrical volume calculation formula; and with reference to GB/T 24586-2009, with inert gas such as helium or nitrogen as the medium and through the gas displacement method, measure the true volume V2 of the separator or substrate using a true density tester. Then, the porosity of the separator or substrate = (V1-V2)/V1×100%. The testing instrument may be an AccuPyc II 1340 fully automatic true density tester from Micromeritics Corporation of the United States.

The first base film 11 and the second base film 12 can be directly laminated by means of hot pressing. During the process of lamination by means of hot pressing, excessively high temperatures will result in low porosity and poor air permeability, while excessively low temperatures will lead to weak bonding between the first base film 11 and the second base film 12. Therefore, an adjustment to an appropriate hot pressing temperature is required. Optionally, the hot pressing temperature is in the range of 20°C-50°C. Referring to Fig. 2, in any implementation of the present application, an interlayer 13 may also be disposed between the first base film 11 and the second base film 1212, where the interlayer 13 includes a binder. Optionally, the interlayer 13 includes a binder and filler particles. When the interlayer 13 is disposed between the first base film 11 and the second base film 12, it can not only avoid process defects during excessive hot pressing lamination but also further enhance the heat resistance and physical properties of the separator, thereby improving the reliability of the secondary battery.

In any implementation of the present application, the binder includes one or more of polyacrylate, acrylic acid, carboxymethyl cellulose, polyvinylidene fluoride-co-trichloroethylene copolymer, polymethyl methacrylate, polyvinylpyrrolidone, polyvinyl acetate, polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, and cyanoethyl pullulan. When an interlayer is disposed between the first base film and the second base film, and the binder in the interlayer includes the aforementioned components, the heat resistance and the physical properties of the separator can be further improved, thereby improving the reliability of the secondary battery. In some embodiments, carboxymethyl cellulose may be used as a thickener to adjust the viscosity of the slurry.

In any implementation of the present application, the filler particles include at least one of inorganic particles, organic particles, or organic-metal framework materials.

Optionally, the inorganic particles include one or more of inorganic particles with a dielectric constant of 5 or higher, inorganic particles with ion conductivity but not storing ions, and inorganic particles capable of undergoing electrochemical reactions.

Optionally, the inorganic particles with a dielectric constant of 5 or higher may include at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, magnesium lithium silicate, magnesium sodium silicate, bentonite, hectorite, zirconium titanate, barium titanate, $Pb(Zr,Ti)O_3$ (abbreviated as PZT), $Pb_{l-m}La_mZr_{l-n}Ti_nO_3$ (abbreviated as PLZT, $0 < m < 1$, $0 < n < 1$), $Pb(Mg_3Nb_{2/3})O_3\text{-}PbTiO_3$ (abbreviated as PMN-PT), and their respective modified inorganic particles. Optionally, the modification method for each inorganic particle may be chemical modification and/or physical modification. The chemical modification methods include coupling agent modification (e.g., using silane coupling agents, titanate coupling agents, etc.), surfactant modification, polymer grafting modification, etc. The physical modification methods may include mechanical dispersion, ultrasonic dispersion, high-energy treatment, etc. Through modification treatment, the agglomeration of inorganic particles can be reduced, thereby enabling the adhesive layer to have a more stable and more uniform structure. Additionally, by selecting coupling agents, surfactants, or polymers with specific functional groups to modify the inorganic particles, it further enhances the adhesive layer's wetting and retention properties toward the electrolyte solution and improves the adhesion of the adhesive layer to the first base film and the second base film.

Optionally, the inorganic particles with ion conductivity but not storing ions may include at least one of $Li_3PO_4$, lithium titanium phosphate $Li_{x1}Ti_{y1}(PO_4)_3$, lithium aluminum titanium phosphate $Li_{x2}Al_{y2}Ti_{z1}(PO_4)_3$, $(LiAlTiP)_{x3}O_{y3}$-type glass, lithium lanthanum titanate $Li_{x4}La_{y4}TiO_3$, lithium germanium thiophosphate $Li_{x5}Ge_{y5}P_{z2}S_w$, lithium nitride $Li_{x6}N_{y6}$, $SiS_2$-type glass $Li_{x7}Si_{y7}S_{z3}$, and $P_2S_5$-type glass $Li_{x8}P_{y8}S_{z4}$, where $0 < x1 < 2$, $0 < y1 < 3$, $0 < x2 < 2$, $0 < y2 < 1$, $0 < z1 < 3$, $0 < x3 < 4$, $0 < y3 < 13$, $0 < x4 < 2$, $0 < y4 < 3$, $0 < x5 < 4$, $0 < y5 < 1$, $0 < z2 < 1$, $0 < w < 5$, $0 < x6 < 4$, $0 < y6 < 2$, $0 < x7 < 3$, $0 < y7 < 2$, $0 < z3 < 4$, $0 < x8 < 3$, $0 < y8 < 3$, $0 < z4 < 7$. This can further improve the ion conductivity of the separator.

Optionally, the inorganic particles capable of undergoing electrochemical reactions may include at least one of lithium-containing transition metal oxides, lithium-containing phosphates, carbon-based materials, silicon-based materials, tin-based materials, and lithium titanium compounds.

Optionally, the organic particles may include one or more of polycarbonate, polythiophene, polypyridine, polystyrene, polyacrylic wax, polyethylene, polypropylene, cellulose, cellulose modifiers (e.g., carboxymethyl cellulose), melamine resin, phenolic resin, polyesters (e.g., polyethylene terephthalate, polyethylene naphthalate, polybutylene terephthalate), silicone resin, polyimide, polyamide-imide, polyarylamide, polyphenylene sulfide, polysulfone, polyethersulfone, polyether ether ketone, polyaryletherketone, copolymers of butyl acrylate and ethyl methacrylate (e.g., crosslinked polymers of butyl acrylate and ethyl methacrylate).

Optionally, the organic-metal framework materials may include one or more of nitrogen-containing heterocyclic ligand-based structures, organic carboxylic acid ligand-based structures, and nitrogen-oxygen mixed ligand-based structures.

In some embodiments, the content of the binder may be greater than or equal to 10%, optionally 10%-30%, based on the total weight of the adhesive layer.

In some embodiments, the content of the filler can be less than or equal to 90%, optionally 40%-90%, 60%-80%, based on the total weight of the adhesive layer.

In some embodiments, the interlayer may further include a dispersant, for example, carboxymethyl cellulose, thereby adjusting the viscosity of the interlayer slurry and improving the quality and uniformity of the interlayer.

In some embodiments, the content of the dispersant may be less than or equal to 25%, optionally less than or equal to 20%, based on the total weight of the adhesive layer.

In any implementation of the present application, the separator 10 satisfies at least one of the following (1)-(3): (1) the weight per unit area of the separator 10 is 5-20 $g/m^2$, optionally 6-15 $g/m^2$; (2) the porosity of the separator 10 is 30%-55%, optionally 35%-45%; and (3) the air permeability of the separator 10 is less than 350 s/100 cc-400 s/100 cc, optionally 150 s/100 cc-300 s/100 cc.

When the separator satisfies at least one of the aforementioned features within the given ranges, the separator can be enabled to possess good heat resistance and strength, thereby improving the reliability and cycling performance of the secondary battery.

Unless otherwise specified, all raw materials used in the separator (e.g., the first base film, the second base film, the binder, the fillers, etc.) are commercially available.

The present application provides a secondary battery, including the separator 10 of any of the aforementioned schemes. When the secondary battery employs the provided separator 10, the reliability of the secondary battery can be improved.

In any implementation of the present application, the secondary battery further includes a positive electrode plate and a negative electrode plate, where the separator 10 is disposed between the positive electrode plate and the negative electrode plate, and the first base film 11 of the separator 10 faces the positive electrode plate.

[Positive electrode plate]

In a secondary battery, the positive electrode plate typically includes a positive electrode current collector and a positive electrode film layer arranged on the positive electrode current collector, where the positive electrode film layer includes a positive electrode active material.

The positive electrode current collector may adopt conventional metal foil or a composite current collector (a composite current collector may be formed by applying a metal material onto a polymer substrate). As an example, the positive electrode current collector may use aluminum foil.

The specific type of the positive electrode active material is not limited and may adopt known active materials applicable to positive electrodes of secondary batteries in the art, which can be selected by those skilled in the art based on actual needs.

As an example, the positive electrode active material may include, but is not limited to, one or more of lithium transition metal oxides, olivine-structured lithium-containing phosphates, and their respective modified compounds. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include, but are not limited to, one or more of lithium iron phosphate, composites of lithium iron phosphate and carbon, lithium manganese phosphate, composites of lithium manganese phosphate and carbon, lithium manganese iron phosphate, composites of lithium manganese iron phosphate and carbon, and modified compounds thereof. These materials are all commercially available.

The modified compounds of the aforementioned materials may involve doping modification and/or surface coating modification.

The positive electrode film layer more optionally further includes a binder, a conductive agent, and other optional additives.

As an example, the conductive agent may be one or more of superconducting carbon, acetylene black, carbon black, Ketjen black, carbon dots, carbon nanotubes, conductive carbon black (e.g., Super P, SP), graphene, and carbon nanofibers.

As an example, the binder may include one or more of polymerized styrene butadiene rubber (SBR), water-based acrylic resin, polyvinylidene difluoride (PVDF), polytetrafluoroethylene (PTFE), ethylene-vinyl acetate copolymer (EVA), polyacrylic acid (PAA), carboxymethyl cellulose (CMC), polyvinyl alcohol, vinylalcohol polymer (PVA), and polyvinyl butyral (PVB).

[Negative electrode plate]

In a secondary battery, the negative electrode plate typically includes a negative electrode current collector and a negative electrode film layer arranged on the negative electrode current collector, where the negative electrode film layer includes a negative electrode active material.

The negative electrode current collector may adopt conventional metal foil or a composite current collector (for example, a composite current collector may be formed by applying a metal material onto a polymer substrate). As an example, the negative electrode current collector may use copper foil.

The specific type of the negative electrode active material is not limited and may adopt known active materials applicable to negative electrodes of secondary batteries in the art, which can be selected by those skilled in the art based on actual needs. As an example, the negative electrode active material may include, but is not limited to, one or more of artificial graphite, natural graphite, hard carbon, soft carbon, silicon-based materials, and tin-based materials. The silicon-based material can be selected from one or more of elemental silicon, a silicon oxide compound (e.g. silicon (II) oxide), a silicon-carbon composite, a silicon-nitrogen composite and silicon alloy. The tin-based material may be selected from one or more of elemental tin, a tin oxygen compound and a tin alloy. These materials are all commercially available.

In some implementations, in order to further improve the energy density of the battery, the negative electrode active material may include a silicon-based material.

The negative electrode film layer more optionally further includes a binder, a conductive agent, and other optional additives.

As an example, the conductive agent may be one or more of superconducting carbon, acetylene black, carbon black, Ketjen black, carbon dots, carbon nanotubes, graphene, and carbon nanofibers.

As an example, the binder may be one or more of styrene butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional additives may be thickeners and dispersants (e.g., carboxymethylcellulose sodium (CMC-Na)) and PTC thermistor materials.

[Electrolyte solution]

The secondary battery may include an electrolyte solution, which functions to conduct ions between the positive and negative electrodes. The electrolyte may include an electrolyte salt and a solvent.

As an example, the electrolyte salt may be one or more selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate ($LiPO2F_2$), lithium difluoro bis(oxalato)phosphate (LiDFOP) and lithium tetrafluoro(oxalato)phosphate (LiTFOP).

As an example, the solvent may be selected from one or more of ethylene carbonate (EC), propylene carbonate (PC), methyl ethyl carbonate (EMC), diethyl carbonate (DEC), dimethyl carbonate (DMC), dipropyl carbonate (DPC), methyl propyl carbonate (MPC), diisopropyl carbonate (EPC), butylene carbonate (BC), fluoroethylene carbonate (FEC), methyl formate (MF), methyl acetate (MA), ethyl acetate (EA), n-propyl acetate (PA), methyl propionate (MP), ethyl propanoate (EP), n-propyl propionate (PP), methyl butyrate (MB), ethyl butyrate (EB), 1,4-butyrolactone (GBL), tetramethylene sulfone (SF), methyl sulfone (MSM), methyl ethyl sulfone (EMS), and diethyl sulfone (ESE).

In some implementations, the electrolyte solution further includes an additive. For example, the additive may include a negative electrode film-forming additive, or may include a positive electrode film-forming additive, and may further include an additive capable of improving certain performances of the battery, such as an additive for improving the overcharging performance of the battery, an additive for improving the high temperature performance of the battery, an additive for improving the low temperature performance of the battery.

When the secondary battery adopts the provided separator, the average fiber filament diameter of the first base film with a higher melting point is greater than the average fiber filament diameter of the second base film with a lower melting point, the smaller average fiber filament diameter of the second base film endows the second base film with abundant pore channel structures, enhancing its tolerance to physical puncture by lithium dendrites. Additionally, when the average fiber filament diameter of the first base film with a higher melting point is greater than the average fiber filament diameter of the second base film with a lower melting point, it is also possible to ensure the continuity and effectiveness of ion transport channels in the final separator, which can enable the final separator to possess both heat resistance and high strength, thereby improving the reliability of the secondary battery.

The examples of the present application have no particular limitation on the shape of the secondary battery, which can be cylindrical, square or any other shape. For example, Fig. 3 shows a secondary battery 5 with a square structure as an example.

In some implementations, the secondary battery may include an outer package. The outer package is used to encapsulate the positive electrode plate, the negative electrode plate, and the electrolyte. The first base film 11 of the separator 10 faces the positive electrode plate.

In some implementations, the outer package of the secondary battery may be a hard case, such as a hard plastic case, an aluminum case, and a steel case. The outer package of the secondary battery may also be a soft pack, such as a pouch-type soft pack. The material of the soft pack may be plastic. For example, it may include one or more of polypropylene (PP), polybutylene terephthalate (PBT), and polybutylene succinate (PBS).

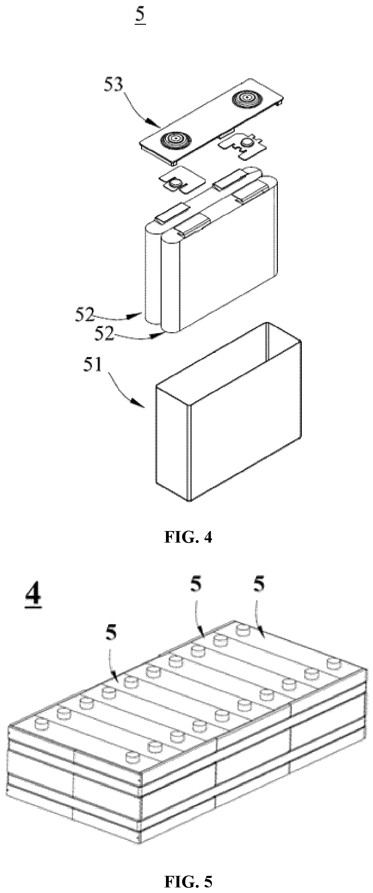

In some implementations, referring to Fig. 4, the outer package may include a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity.

The preparation method for the secondary battery in the present application is well-known. In some embodiments, the secondary battery may be formed by assembling the positive electrode plate, the separator 10, the negative electrode plate, and the electrolyte solution. As an example, the positive electrode plate, the separator 10, and the negative electrode plate may be formed into an electrode assembly through winding and/or stacking processes. The electrode assembly is placed in the outer package, dried and then filled with the electrolyte solution, and subjected to vacuum sealing, standing, chemical formation, shaping, and other processes to obtain a battery cell. A plurality of battery cells may be further connected in series, in parallel, or in a mixed connection to form a battery module. A plurality of battery modules may be further connected in series, in parallel, or in a mixed connection to form a battery pack. In some embodiments, a plurality of battery cells may directly form a battery pack.

Fig. 5 shows a battery module 4 as an example. Referring to Fig. 5, in the battery module 4, a plurality of secondary batteries 5 can be sequentially arranged along the length direction of the battery module 4. Of course, any other arrangement is also possible. The plurality of secondary batteries 5 may further be fixed by fasteners.

The battery module 4 may further include a shell having an accommodating space, in which the plurality of secondary batteries 5 is accommodated.

In some implementations, the above-mentioned battery modules can further be assembled into a battery pack, and the number of battery modules contained in the battery pack can be adjusted according to the application and capacity of the battery pack.

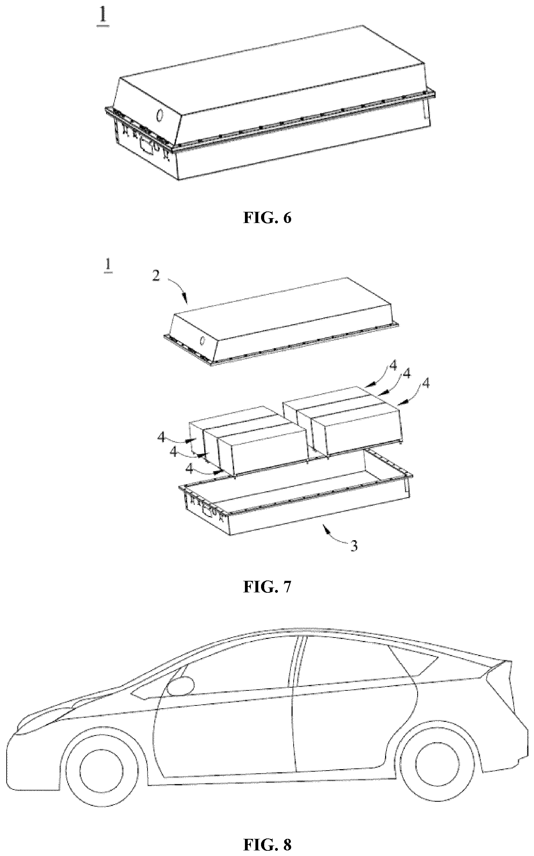

Figs. 6 and 7 show a battery pack 1 as an example. Referring to Figs. 6 and 7, the battery pack 1 may include a battery box and a plurality of battery modules 4 disposed in the battery box. The battery box comprises an upper box body 2 and a lower box body 3, where the upper box body 2 can cover the lower box body 3 and forms an enclosed space for accommodating the battery module 4. The plurality of battery modules 4 may be arranged in the battery box in any manner.

[Apparatus]

The present application further provides an electrical apparatus including the secondary battery of the present application. The battery cell, the battery module, or the battery pack may serve as a power source for the apparatus or as an energy storage unit of the apparatus. The apparatus may be, but is not limited to, a mobile device (e.g., a mobile phone and a laptop, etc.), an electric vehicle (e.g., an all-electric vehicle, a hybrid electric vehicle, a plug-in hybrid electric vehicle, an electric bicycle, an electric scooter, an electric golf cart, and an electric truck, etc.), an electric train, a ship and a satellite, an energy storage system, and the like.

The apparatus may select the battery cell, the battery module, or the battery pack according to its usage requirements.

Fig. 8 is an example of an electrical apparatus. The electrical apparatus may be an all-electric vehicle, a hybrid electric vehicle, a plug-in hybrid electric vehicle. In order to meet the requirements of the electrical apparatus for high power and high energy density of a secondary battery, a battery pack or a battery module may be used.

As another example, the electrical apparatus may be a mobile phone, a tablet, a laptop. The electrical apparatus is generally required to be thin and light, and may use a battery cell as a power source.

Since the apparatus of the present application includes the secondary battery provided in the present application, it at least possesses the same advantages as the secondary battery.

The beneficial effects of the present application are further illustrated below in conjunction with the examples.

In order to make the technical problems addressed by, the technical solutions, and the beneficial effects of the embodiments of the present application clearer, the following will further describe them in detail in conjunction with the embodiments and the accompanying drawings. It is apparent that the described embodiments are only a part of the embodiments of the present application rather than not all of the embodiments. The following description of at least one exemplary embodiment is merely illustrative in nature and is in no way intended to limit the present application, and application thereof. Based on the embodiments of the present application, all other embodiments derived by a person of ordinary skill in the art without any creative effort shall all fall within the scope of the present application.

I. Preparation of separators

Separator 1:

(1) Provide a first base film and a second base film.

The first base film satisfies the following requirements: the material is polypropylene (PP), the average fiber filament diameter of the first base film is 80 nm, and the melting point is 165°C.

The second base film satisfies the following requirements: the material is polyethylene (PE), the average fiber filament diameter of the second base film is 50 nm, and the melting point is 135°C.

Here, the ratio D1/D2 of the average fiber filament diameter D1 of the first base film to the average fiber filament diameter D2 of the second base film is 1.60.

(2) Prepare an interlayer slurry: uniformly mix the binder polyacrylate, the filler alumina particles, and carboxymethyl cellulose in a ratio of 1:4:1 with an appropriate amount of solvent deionized water to form an interlayer slurry.
(3) Coat the interlayer slurry from step (2) on one side of the second base film from step (1) to form an interlayer.
(4) Hot-press and laminate the first base film with the coated second base film from step (3) to obtain the separator, where the interlayer is located between the first base film and the second base film.

The preparation methods for separators 2-13 are similar to that for separator 1, with differences in adjusting one or more of the following parameters: melting point, material, or average fiber filament diameter of the first base film or the second base film. Specific details are provided in Table 1. All other preparation methods are consistent with that for separator 1.

II. Preparation of battery

Embodiment 1

1. Preparation of positive electrode plate

Uniformly mix the positive electrode active material $LiNi_{0.8}Co_{0.1}Mn_{0.1}O_2$ (NCM811), the conductive agent carbon black (SuperP), and the binder polyvinylidene fluoride (PVDF) in a mass ratio of 96.2:2.7:1.1 with an appropriate amount of solvent N-Methylpyrrolidone (NMP) to obtain a positive electrode slurry, coat the positive electrode slurry onto a positive electrode current collector aluminum foil, and subject it to drying, cold pressing, slitting, and cutting processes to obtain the positive electrode plate.

2. Preparation of negative electrode plate

Uniformly mix the negative electrode active material artificial graphite, the conductive agent carbon black (SuperP), the binder styrene-butadiene rubber (SBR), and sodium carboxymethyl cellulose (CMC-Na) in a mass ratio of 96.4:0.7:1.8:1.1 with an appropriate amount of the solvent deionized water to obtain a negative electrode slurry, coat the negative electrode slurry onto a negative electrode current collector copper foil, and subject it to drying, cold pressing, slitting, and cutting processes to obtain the negative electrode plate.

3. Separator

The separator is the aforementioned separator 1 prepared above.

4. Preparation of electrolyte solution

Mix ethylene carbonate (EC) and ethyl methyl carbonate (EMC) in a mass ratio of 30:70 to obtain an organic solvent, dissolve fully dried electrolyte salt $LiPF_6$ into the mixed solvent to achieve an electrolyte salt concentration of 1.0 mol/L, and mix uniformly to obtain the electrolyte solution.

5. Preparation of secondary battery

Stack the positive electrode plate, the separator, and the negative electrode plate in sequence, ensuring that the separator is positioned between the positive and negative electrode plates to serve the function of isolation, where the second base film faces the negative electrode plate, then wind the stacked layers to form an electrode assembly; place the electrode assembly in an outer package, inject the electrolyte prepared above into the dried secondary battery, and perform vacuum encapsulation, standing, chemical formation, and shaping processes to obtain a secondary battery.
The preparation methods for the secondary batteries in Embodiments 2-9 and Comparative Examples 1-4 are similar to that for the secondary battery in Embodiment 1, differing in the use of different separators (Embodiments 1-9 employ Separators 1-9; Comparative Examples 1-4 employ Separators 10-13). Specific details are provided in Table 1.

III. Battery performance test

1. Transverse-direction thermal shrinkage rate test at 250°C

Sample preparation: punch the separator prepared above into samples with a width of 50 mm and a length of 100 mm using a punching machine, take five parallel samples and place them on an A4 paper and fix them, then place the A4 paper carrying the samples on corrugated paper with the thickness of 1 mm to 5 mm.
Sample test: place the A4 paper on the corrugated paper into an air-blowing oven, set the temperature of the air-blowing oven to 250°C, and once the temperature reaches the set temperature and stabilizes for 30 minutes, start timing, and upon reaching the set duration (e.g., 1 hour), measure the width of the separator and mark the value as a.

$$\text{Transverse-direction (TD) thermal shrinkage rate} = [(50-a)/50] \times 100\%,$$

and the average value of the five parallel samples is taken as the test result.

2. Thermal oven performance

At 25 °C, charge the secondary battery at a constant current of 1 C to 4.2 V, followed by constant voltage charging until the current drops to ≤0.05 C, and allow it to stand for 5 minutes, then test each secondary battery in a DHG-9070A DHG series high-temperature oven with clamps, and increase the temperature from room temperature to 80°C ± 2°C at a rate of 5 °C/min and hold for 30 minutes; subsequently, raise the temperature at a temperature rise rate of 5°C/min, maintaining each 5°C increment for 30 minutes. Monitor the change in the surface temperature of the secondary battery during heating. The oven temperature corresponding to an abrupt rise in the temperature is recorded as the thermal oven failure temperature of the secondary battery. A higher thermal oven failure temperature indicates better thermal reliability of the battery. For accuracy, the average value of the five parallel samples is taken as the test result.

Table 1: Test Results of Battery Performance for Embodiments and Comparative Examples

| Serial number | | | Embodi-ment 1 | Embodi-ment 2 | Embodi-ment 3 | Embodi-ment 4 | Embodi-ment 5 | Embodi-ment 6 | Embodi-ment 7 | Embodi-ment 8 | Embodi-ment 9 | Compara-tive Example 1 | Compara-tive Example 2 | Compara-tive Example 3 | Compara-tive Example 4 |
|---|---|---|---|---|---|---|---|---|---|---|---|---|---|---|---|
| Structure of separator | First base film | Melting point (°C) | 165 | 165 | 165 | 165 | 165 | 165 | 165 | 327 | 270 | 165 | 165 | 327 | 270 |
| | | Material | PP | PP | PP | PP | PP | PP | PP | PTFE | PET | PP | PP | PTFE | PET |
| | | Average fiber filament diameter D1 (nm) | 80 | 100 | 120 | 160 | 260 | 300 | 350 | 120 | 350 | 100 | 120 | 120 | 200 |
| | Second base film | Melting point (°C) | 135 | 135 | 135 | 135 | 135 | 135 | 135 | 135 | 135 | 135 | 135 | 135 | 135 |
| | | Material | PE | PE | PE | PE | PE | PE | PE | PE | PE | PE | PE | PE | PE |
| | | Average fiber filament diameter D2 (nm) | 50 | 80 | 80 | 120 | 180 | 220 | 260 | 80 | 80 | 100 | 180 | 220 | 220 |
| | D1/D2 | | 1.60 | 1.25 | 1.50 | 1.33 | 1.44 | 1.36 | 1.35 | 1.50 | 4.38 | 1.00 | 0.67 | 0.55 | 0.91 |
| Separator performance test | Transverse-direction thermal shrinkace rate at 250 °C (%) | | 1.9 | 1.7 | 1.5 | 1.3 | 1.2 | 0.9 | 0.8 | 0.5 | 0.7 | 3.5 | 4.0 | 2.2 | 2.4 |
| Battery performance test | Thermal oven performance (°C) | | 158 | 160 | 163 | 168 | 170 | 172 | 175 | 180 | 179 | 144 | 145 | 143 | 144 |

As shown in Table 1, in Embodiments 1-9, the melting point of the second base film is lower than that of the first base film, and the average fiber filament diameter in the first base film is greater than that in the second base film. By using the separator defined in the present application with excellent heat resistance and low transverse-direction shrinkage rate, the battery manufactured using the separator according to the present application demonstrates superior thermal oven performance, thereby significantly improving the thermal reliability of the battery. In Comparative Examples 1-4, the separators exhibit poor heat resistance, easily leading to battery safety issues.

While the above description merely provides specific implementations of the present application, the scope of the present application is not limited to the specific implementations. Any person skilled in the art may easily conceive of various equivalent modifications or replacements without departing from the scope disclosed in the present application. All these modifications or replacements should be encompassed within the scope of the present application. Therefore, the scope of the present application shall be determined with reference to the scope of the claims.

**Claims**

1.  A separator, comprising:

    a first base film; and
    a second base film, a melting point of the second base film being lower than a melting point of the first base film;
    wherein an average fiber filament diameter in the first base film is greater than an average fiber filament diameter in the second base film.

2.  The separator of claim 1, wherein a ratio of the average fiber filament diameter in the first base film to the average fiber filament diameter in the second base film is greater than or equal to 1.1-9, optionally 1.2-4.5.

3.  The separator of claim 1, wherein the average fiber filament diameter in the first base film is 50 nm-550 nm, optionally 80 nm-350 nm.

4.  The separator of claim 1, wherein the average fiber filament diameter in the second base film is 30 nm-450 nm, optionally 50 nm-260 nm.

5.  The separator of claim 1, wherein a ratio of a weight per unit area of the first base film to a weight per unit area of the second base film is greater than or equal to 1.02; optionally 1.2-2.5.

6.  The separator of any one of claims 1 to 5, wherein

    the weight per unit area of the first base film is 2.5 g/m$^2$-10 g/m$^2$, optionally 3 g/m$^2$-7 g/m$^2$; and/or
    the weight per unit area of the second base film is 2 g/m$^2$-10 g/m$^2$, optionally 2.5 g/m$^2$-6 g/m$^2$.

7.  The separator of any one of claims 1 to 6, wherein the melting point of the first base film is 160 °C-370 °C, optionally 165 °C-330 °C; and/or
    the melting point of the second base film is 120 °C-265 °C, optionally 130 °C-230 °C.

8.  The separator of any one of claims 1 to 7, wherein

    a thickness of the first base film is greater than or equal to a thickness of the second base film; and
    optionally, a ratio of the thickness of the first base film to the thickness of the second base film is 1.1-5, optionally 1.5-3.0.

9.  The separator of any one of claims 1 to 8, wherein

    a thickness of the first base film is 2 $\mu$m-12 $\mu$m, optionally 3 $\mu$m-6 $\mu$m;
    and/or, a thickness of the second base film is 2 $\mu$m-9 $\mu$m, optionally 3 $\mu$m-5 $\mu$m.

10. The separator of any one of claims 1 to 8, wherein a ratio of a porosity of the first base film to a porosity of the second base film is 1.05-3, optionally 1.1-1.5.

11. The separator of any one of claims 1 to 10, wherein

a porosity of the first base film is 30%-80%, optionally 50%-75%; and/or
a porosity of the second base film is 30%-70%, optionally 40%-50%.

12. The separator of any one of claims 1 to 11, further comprising an interlayer, wherein the interlayer is disposed between the first base film and the second base film, and the interlayer comprises a binder; and optionally, the interlayer further comprises filler particles.

13. The separator of claim 12, wherein the binder comprises one or more of polyacrylate, acrylic acid, carboxymethyl cellulose, polyvinylidene fluoride-co-trichloroethylene copolymer, polymethyl methacrylate, polyvinylpyrrolidone, polyvinyl acetate, polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, and cyanoethyl pullulan.

14. The separator of claim 12 or 13, wherein the filler particles comprise at least one of inorganic particles, organic particles, and organic-metal framework materials.

15. The separator of any one of claims 1 to 14, wherein the separator satisfies at least one of the following (1)-(6):

a weight per unit area of the separator is 5-20 $g/m^2$, optionally 6-15 $g/m^2$;
a porosity of the separator is 30%-55%, optionally 35%-45%; and
an air permeability of the separator is less than 350 s/100 cc, optionally 150 s/100 cc-300 s/100 cc.

16. A secondary battery, comprising the separator of any one of claims 1 to 15.

17. The secondary battery of claim 16, comprising a positive electrode plate and a negative electrode plate, wherein the separator disposed between the positive electrode plate and the negative electrode plate, and the second base film faces the negative electrode plate.

18. An electrical apparatus, comprising the secondary battery of claim 16 or 17.

FIG. 1

FIG. 2

**5**

FIG. 3

FIG. 4

FIG. 5

1

**FIG. 6**

1

2

4 4
4

4
4
4

3

**FIG. 7**

**FIG. 8**

## INTERNATIONAL SEARCH REPORT

| | International application No. |
|---|---|
| | **PCT/CN2023/082337** |

| | |
|---|---|
| **A.** | **CLASSIFICATION OF SUBJECT MATTER** |

H01M50/489(2021.01)i;  H01M50/491(2021.01)i;  H01M50/494(2021.01)i;  H01M50/44(2021.01)i;  H01M50/449(2021.01)i;  H01G11/52(2013.01)i

According to International Patent Classification (IPC) or to both national classification and IPC

| | |
|---|---|
| **B.** | **FIELDS SEARCHED** |

Minimum documentation searched (classification system followed by classification symbols)

IPC:  H01M H01G

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 隔膜, 隔离膜, 隔片, 隔板, 分离膜, 分隔膜, 第一, 第二, 多个, 复数, 若干, 熔点, 纤维, 直径, separator, isolating membrane, first, second, multi, some, melting-point, low, high, diameter, fibre

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | CN 102498592 A (KURARAY CO., LTD.) 13 June 2012 (2012-06-13) description, paragraphs [0024]-[0142] | 1-18 |
| Y | JP 2010103050 A (KURARAY CO.) 06 May 2010 (2010-05-06) description, paragraphs [0014]-[0123] | 1-18 |
| Y | KR 20130137390 A (LG CHEMICAL LTD.) 17 December 2013 (2013-12-17) description, paragraphs [0008]-[0055] | 1-18 |
| Y | US 2019237731 A1 (SAMSUNG ELECTRONICS CO., LTD.) 01 August 2019 (2019-08-01) description, paragraphs [0008]-[0070] | 1-18 |
| A | JP S61232560 A (FUJI ELECTROCHEMICAL CO., LTD.) 16 October 1986 (1986-10-16) entire document | 1-18 |
| A | KR 101292656 B1 (TOPTEC HNS CO., LTD.) 23 August 2013 (2013-08-23) entire document | 1-18 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **24 October 2023** | **03 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082337**

| Patent document cited in search report | | | Publication date (day/month/year) | Patent family member(s) | | | Publication date (day/month/year) |
|---|---|---|---|---|---|---|---|
| CN | 102498592 | A | 13 June 2012 | KR | 20120080596 | A | 17 July 2012 |
| | | | | KR | 101714811 | B1 | 09 March 2017 |
| | | | | US | 2012164514 | A1 | 28 June 2012 |
| | | | | US | 8802271 | B2 | 12 August 2014 |
| | | | | EP | 2479820 | A1 | 25 July 2012 |
| | | | | EP | 2479820 | A4 | 05 March 2014 |
| | | | | EP | 2479820 | B1 | 26 October 2016 |
| | | | | WO | 2011033975 | A1 | 24 March 2011 |
| | | | | JP | 5529148 | B2 | 25 June 2014 |
| JP | 2010103050 | A | 06 May 2010 | JP | 5189459 | B2 | 24 April 2013 |
| KR | 20130137390 | A | 17 December 2013 | KR | 101491062 | B1 | 10 February 2015 |
| US | 2019237731 | A1 | 01 August 2019 | KR | 20190093446 | A | 09 August 2019 |
| JP | S61232560 | A | 16 October 1986 | None | | | |
| KR | 101292656 | B1 | 23 August 2013 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1946632004 T

- GB 245862009 T